# EUROPEAN PATENT APPLICATION

(11) **EP 4 212 234 A1**
(43) Date of publication of application: **19.07.2023**
(21) Application number: 22151421.9
(22) Date of filing: 13.01.2022
(51) Int. Cl.: B01D 65/02

(54) **A METHOD FOR USE IN CLEANING A PROCESSING SYSTEM AND A PROCESSING SYSTEM**

(71) Applicant: GEA Process Engineering A/S, 2860 Søborg (DK)
(72) Inventor: MØRK, Nils, 2860 Søborg (DK)
(74) Representative: AWA Denmark A/S

(57) **Abstract**

Disclosed is a method for use in cleaning a processing system, the processing system comprising a loop, the loop comprising at least one filtration membrane, and a pump for feeding to the loop a fluid during a cleaning-in-place, CIP, process of the processing apparatus, the method comprising: during a first time interval during the CIP process of the processing apparatus, applying by the pump a first fluid flow rate over the at least one filtration membrane, and during a second time interval during the CIP process of the processing apparatus, applying by the pump a second fluid flow rate over the at least one filtration membrane, wherein the second fluid flow rate is larger than the first fluid flow rate. Further disclosed is a control device for controlling a setting of a pump, a processing system comprising the control device, and a computer program product.

## Description

### Technical Field

The present invention relates to method for use in cleaning a processing system, a control unit, a processing system comprising the control unit, and a computer program product.

### Background Art

Processing systems are typically used in various fields where filtration is needed. Such processing systems are widely used around the world for a plurality of purposes, such as the removal of bacteria, microorganisms, or particulates from a fluid to achieve a desired result. Processing systems are furthermore used within a wide field of industries such as the dairy industry, food and beverage industry, fermentation and biotechnology industry, chemical industries, in wastewater, water desalination, and drinking water applications.

Processing systems often comprise a membrane filter with a filtration membrane, typically arranged in loops, so that one loop comprises one or more membrane filters (in series or parallel). The membrane filters are typically adapted to filter certain elements of the product, which the processing system is processing. For the filtering to be sufficient, the filters typically need to be cleaned from time to time, such as after a certain period of operation time of the processing system. Often, the filters are cleaned while remaining in the processing system in a cleaning-in-place (CIP) process. A such CIP process can be used to clean both the filters and other parts the processing system, such as pipes, ports, valves, and the like, of the processing system.

A CIP process typically comprises a number of steps, such as interchangeably applying specific various cleaning agents or chemicals to the entire processing system or a part thereof and applying water to rinse the system. Operation of a CIP process of filtration equipment is commonly carried out in several stages or steps consisting of rinsing/flushing with water followed by recirculation of cleaning agents and/or a mixture of water cleaning chemicals also known as a CIP step. During the CIP steps, a temperature, pH value, and crossflow, i.e. a mechanical working force which together with the chemicals and temperature helps clean the membranes, in the loops are typically limited based on the tolerances of the installed membranes. The cleaning agents are often provided as a fluid and applied to the system and filters by means of pumps.

To ensure a sufficient cleaning of the system and filters, however, a CIP process typically takes some time to perform, during which the processing system is typically prevented from processing products. During this time, however, the processing system consumes energy and thus adds an increasing cost as well as an increased environmental impact, which the processing system has.

It is therefore desirable to reduce the costs and environmental impact of the processing system whilst ensuring a sufficient cleaning of the processing system, notably the filtration membranes thereof.

### Summary of the Invention

It is an object of the present invention to provide an improved method for use in cleaning a processing system, which overcomes or at least partly alleviates the problems of the prior art.

In a first aspect, the present disclosure relates to method for use in cleaning a processing system, the processing system comprising a loop, the loop comprising at least one filtration membrane and a pump for feeding to the loop a fluid during a cleaning-in-place, CIP, process of the processing apparatus. The method comprises: during a first time interval during the CIP process of the processing apparatus, applying by the pump a first fluid flow rate over the at least one filtration membrane, and during a second time interval during the CIP process of the processing apparatus, applying by the pump a second fluid flow rate over the at least one filtration membrane, wherein the second fluid flow rate is larger than the first fluid flow rate.

It has been realised that by applying a first, lower fluid flow rate for a first time period and a second, higher fluid flow rate for a second period of time, the energy consumption of the pump during a CIP process may be reduced compared to a traditional CIP process, in which the pump applies a high fluid flow rate constantly. Notably, by applying the first flow rate in the first time interval, the pump may during this first time interval need to pump less fluid around, which again allows for the pump speed to be reduced, thereby reducing the power and thus energy consumption of the pump during this first time interval. By furthermore applying the second, higher fluid flow rate for the second period of time, a sufficient cleaning of the filtration membrane may be provided without having to increase the total duration of the CIP.

In the context of this disclosure, a flow rate may refer to a volumetric flow rate or a mass flow rate.

In the context of this disclosure, applying a specific flow rate over a membrane may refer to and/or imply applying the specific flow rate across the membrane and/or to apply a specific crossflow of the membrane. Throughout the text, the term "filtration membrane" and "membrane" may be used interchangeably.

The filtration membrane(s) may be any type of filtration membrane, such as a ceramic filtration membrane and/or a polymeric filtration membrane. Alternatively or additionally, the filtration membrane(s) may be one or more cross-flow filtration membrane.

In some embodiments, the filtration membrane may be a first filtration membrane, potentially of a filter of the first loop. A filter of the first loop may be a first filter and/or may comprise one or more filtration membranes.

The CIP process may be or may comprise a chemical cleaning of the processing system. Alternatively or additionally, the CIP process may be a CIP process of the filter(s) and/or filtration membranes.

In the context of this disclosure the term fluid is to be interpreted broadly. For example, a fluid in the context of this disclosure also encompasses suspensions, mixtures of solids and liquids, mixtures of solids and gasses, an emulsion, an aerosol solution, etc.

In some embodiments, the fluid may be a cleaning agent and/or a chemical solution for cleaning the filters and/or filtration membranes, such as water, an alkaline cleaning solution, an acidic cleaning solution, and/or an enzymatic cleaning solution.

The first and second fluid flow rates may be a first and second permeate flow rate. Alternatively or additionally, the first and second fluid flow rates may be rates of a first and second fluid flow, such as rates of a first and second permeate flow, respectively. In the context of this disclosure the term permeate is to be interpreted broadly. A permeate may be any fluid which is introduced into the membrane filtrate plant and has passed a membrane and been filtered through the membrane. The permeate may be water, a cleaning agent, or a mixture of water and one or more cleaning agents.

In some embodiments, applying the first and second fluid flow rates may be by feeding, by the pump, the fluid to the loop, a filter(s) and/or the membrane(s). Alternatively or additionally, the fluid may be provided to the loop, the filter(s), and/or the membrane(s), during the first and second time intervals, respectively, by the pump so as to provide the first and second fluid flow rates, respectively over the filtration membrane(s).

The first time interval may occur prior to the second time interval or after the second interval.

In some embodiments, the pump may be switched off to provide the first fluid flow rate and be switched on to provide the second flow rate. Alternatively or additionally, the first fluid flow rate may be a zero-value flow rate.

In some embodiments, the first and/or the second time intervals may be predetermined periods of time, such as a specific number of seconds or minutes. Alternatively, the first and/or the second time intervals may be a period of time, which it takes for the pump to provide the loop with a predetermined mass or volume of fluid. For instance, in some embodiments, the second time interval may be a period of time which it takes for a pump to provide to the loop a predetermined volume of fluid at the second fluid flow rate. Potentially, the first time interval may be and/or constitute the remainder of a duration of the CIP process and/or a stage or part of the CIP process. Alternatively or additionally, where the steps of providing the first and second fluid flow rates for the first and second time intervals, respectively, are repeated during the CIP process, each second time interval may be a period of time which it takes for a pump to provide to the loop a predetermined volume of fluid at the second fluid flow rate and the sum of the first time intervals may potentially constitute the remainder of a duration of the CIP process and/or a stage or part of the CIP process.

The first and second time intervals and any other time intervals may be of different length or may be of the same lengths. In some embodiments, e.g. where the first and second time intervals may be repeated, any repeated first and/or second time intervals may be of the same or different lengths. For instance, where a first time interval is repeated, the initial first time interval may have a different length than any repeated first time interval, and where a second time interval is repeated, the initial second time interval may have a different length than any repeated second time interval.

In some embodiments, the first, second and/or any other time interval, e.g. a length or duration thereof, may be dependent on a number of parameters, such as a type and/or characteristic of a cleaning agent.

In some embodiments, the method further comprises determining, when the first fluid flow is applied, a first pressure difference across the filtration membrane. Alternatively or additionally, the method further comprises determining, when the second fluid flow is applied, a second pressure difference across the filtration membrane. The second pressure may be larger than the first pressure difference. Where an inlet and an outlet of the loop is provided, the first and/or second pressure differences may be determined between the inlet and the outlet and, potentially where more filters and/or filtration membranes are provided in the loop, estimated for each filter and/or filtration membrane.

The first and second pressure differences may be a first and second fluid pressure difference, respectively.

In some embodiments, the first and second time intervals may each be non-zero time intervals. Alternatively or additionally, the first fluid flow may be provided continuously and/or sustained throughout the first time interval. Alternatively or additionally, the second fluid flow may be provided continuously and/or sustained throughout the second time interval. The pump may be ramped up to provide the second fluid flow from providing the first fluid flow.

The first and second time interval may be first and second time intervals during a stage of a CIP process, such as a flushing stage or a stage of cleaning with a cleaning agent, e.g. a stage of cleaning with an alkaline cleaning agent, a stage of cleaning with an acidic cleaning agent, or a stage of cleaning with an enzymatic cleaning agent.

Each loop may comprise an inlet, potentially connected, such as fluidly connected, to the pump and through which the fluid may enter the loop to the filtration membrane. The loop may comprise an outlet, through which the fluid may exit the loop from the filtration membrane.

The outlet may be connected, such as fluidly connected, to a baseline. The baseline may be connected to the pump, potentially so that a fluid exiting the loop from the outlet may be applied to the inlet by the pump. Alternatively or additionally, where the processing system comprises a plurality of loops, each comprising a respective pump, the outlets of each loop may be connected to a same and/or common baseline.

The processing system may further comprise one or more feed pumps for feeding the fluid to the loop including the loop pump. Where the processing system comprises a plurality of loops, each comprising a respective pump, the one or more feed pumps may be provided to feed the fluid to some or all loops of the plurality of loops.

Where the loop(s) comprise an outlet connected to a baseline, the feed pump may furthermore be connected, such as fluidly connected, to the baseline and/or to a same or common baseline.

In some embodiments, the method further comprises:
during a third time interval during the CIP process of the processing apparatus, applying by the pump a third fluid flow rate over the at least one filtration membrane, wherein the second fluid flow rate is larger than the third fluid flow rate.

Thereby, the pump may provide a third, lower fluid flow rate for the third time interval, in turn allowing for a lower power and energy consumption by the pump in the third time interval.

The third fluid flow rate may be identical to, larger than, or smaller than the first fluid flow rate.

The third time interval may be after the second time interval and/or after the first and second time intervals.

It will be appreciated that any feature described above and in the following with respect to the first time interval may also apply to the third time interval.

In some embodiments, the method may further comprise during a further time interval during the CIP process of the processing apparatus applying by the pump a further fluid flow rate over the filtration membrane, the further fluid flow rate being identical to the second fluid flow rate and/or larger than the first and third fluid flow rates. Thereby, the fluid flow rate over the membrane may be pulsed between the lower first and third fluid flow rates and the larger second and further fluid flow rates. Alternatively or additionally, the first, second, third, and further fluid flow rates may be applied interchangeably and/or sequentially, potentially multiple times, during the CIP process of the processing apparatus.

In some embodiments, the fluid flow rate over the membrane may be pulsed between the first and second fluid flow rates by repeatedly interchangeably applying these during time intervals.

Alternatively, the method may further comprise during a third time interval during the CIP process of the processing apparatus applying by the pump a third fluid flow rate over the filtration membrane, wherein the third fluid flow rate is lower than the second fluid flow rate.

In some embodiments, the first and second fluid flow rates are provided by setting one or more of a power consumption of the pump, an output power of the pump, a speed of a pump, a loop recirculation flow, a permeate flow, a baseline pressure present at an outlet of the loop, and/or a valve in the loop.

Thereby the first and second fluid flow rates may be easily applied, thus allowing for a stable control of the pump.

A power consumption and/or an output power may be a respective electrical power consumed by the pump and/or produced by the pump, when the pump feeds to the filtration membrane the first and second fluid flows, respectively. The power consumption and/or output power may be determined based on a measured input power to the pump and/or a measured or estimated output power of the pump. In some embodiments, the power consumption and/or output power may, during the first time interval be set to a first predetermined power value, at which the pump delivers a first amount of fluid per time, potentially resulting in the first fluid flow rate over the membrane. Alternatively or additionally, the power consumption and/or output power may, during the first time interval be set to a second predetermined power value, at which the pump delivers a second amount of fluid per time, potentially resulting in the second fluid flow rate over the membrane. The first and second predetermined power values may be determined based on knowledge of the pump.

The speed of the pump may be, for instance, be a number of rotations per minute of the pump, such as of a cam shaft of the pump.

The loop recirculation flow may be a fluid flow, i.e. a flow of the fluid, which the pump provides to the loop and which is, subsequently, provided back to the pump from the loop. In some embodiments, this may be a flow from an inlet to an outlet of the loop and back to the pump. Alternatively or additionally, the loop recirculation flow may be and/or may be determined as the fluid flow, which is provided from an outlet of the loop to the pump of the loop, potentially along the baseline.

The baseline pressure may be a pressure, such as a fluid pressure, at an outlet of the loop, such as at the baseline. In some embodiments, the fluid flow over the membrane may be increased by increasing the baseline pressure and/or the fluid flow over the membrane may be reduced by reducing the baseline pressure.

Where a valve is provided, this may be configured to reduce the fluid flow over the membrane by partly closing or closing for a fluid flowing to the loop and/or membrane. Alternatively or additionally, the valve may be configured to increase the fluid flow over the membrane by partly opening or opening for a fluid flowing to the loop and/or membrane.

Alternatively or additionally, the first and second fluid flow rate may be provided by determining and adjusting one or more of a power consumption and a speed of a pump, adjusting a loop recirculation flow, adjusting the permeate flow, alternating a baseline pressure (present at the outlet of the loop), and/or by adjusting a valve in the loop.

In some embodiments, the first fluid flow rate over the at least one membrane is between 0 % and 80 % of the second fluid flow rate, such as between 0 % and 70 % of the second fluid flow rate, such as between 0 % and 60 % of the second fluid flow rate, such as between 0 % and 50 % of the second fluid flow rate.

Where multiple filters and/or membranes are provided in the loop, the first fluid flow rate over each membrane may be between 0 % and 80 %, such as between 0 % and 70 %, such as between 0 % and 60 %, such as between 0 % and 50 % of the second fluid flow rate over each membrane.

By the first fluid flow rate being a specific percentage of the second fluid flow rate may herein be understood that a value of the first fluid flow rate may be e.g. between 0 and 0.8 times a corresponding value of the second fluid flow rate. For instance, the first and second fluid flow rates, such as a respective value thereof, may be determined in m³/minute or m³/hour over a membrane. Correspondingly, the first fluid flow rate, e.g. the value thereof, may be between 0 and 0.8 times a corresponding value of the second fluid flow rate.

By the first fluid flow rate being 0 times the second fluid flow rate may herein be understood that the pump may be switched off during the first time interval. While a small fluid flow may still occur during this first time interval due to vibrations, movements of fluid, e.g. in a baseline, or the like, it will be understood that this, however, is not considered a first fluid flow rate in the context of this disclosure.

In some embodiments, the first fluid flow rate may be between 0.5 % and 80 %, such as between 0.5 % and 70 %, such as between 0.5 % and 60 %, such as between 0.5 % and 50 %, of the second fluid flow rate.

In some embodiments, the method further comprises:
determining a first pressure difference across the at least one filtration membrane, the first pressure difference being caused by the first fluid flow rate of fluid over the at least one filtration membrane,
determining a second pressure difference across the at least one filtration membrane, the second pressure difference being caused by the second fluid flow rate of fluid over the at least one filtration membrane,
wherein the first fluid flow rate is applied to provide a first pressure difference, which is between 0 % and 80 % of the second pressure difference.

Thereby the first and second fluid flow rates may be set or adjusted based on the pressure difference, thereby allowing for an easy setting or adjustment of the pumps to provide the first and second fluid flow rates.

In some embodiments, the first and second pressure differences may be first and second pressure differences, respectfully, between an inlet and an outlet of the loop. The first and second pressure differences may be pressure differences between an inlet pressure provided by the pump and a baseline pressure.

Alternatively or additionally, where a loop comprises a plurality of filters and/or filtration membranes, the first and second pressure differences may be first and second pressure differences, respectively, across only one filtration membrane of the plurality of membranes or across some or all filtration membranes of the plurality of membranes.

The first pressure difference over the at least one membrane may be between 0 % and 80 % of the second pressure difference, such as between 0 % and 70 % of the second pressure difference, such as between 0 % and 60 % of the second pressure difference, such as between 0 % and 50 % of the second pressure difference. Alternatively, the first pressure difference over the membrane may be between 0.5 % and 80 % of the second pressure difference, such as between 0.5 % and 70 % of the second pressure difference, such as between 0.5 % and 60 % of the second pressure difference, such as between 0.5 % and 50 % of the second pressure difference.

In some embodiments, the applying of the first fluid flow rate and the applying of the second fluid flow rate are repeated during the CIP process of the processing apparatus.

Thereby, the power and/or energy consumption may be further reduced, e.g. over a part or a stage of a CIP process or an entire CIP process.

The method may in some embodiments further comprise repeating the steps of applying the first and second fluid flows for the first and second time intervals, respectively.

The first and second fluid flow rates may be repeated during a part of the CIP process and/or during the entirety of the CIP process or a stage thereof.

In some embodiments, the first and second time intervals may be repeated.

The applying of the first fluid flow rate and the applying of the second fluid flow rate may be repeated during a part or a stage of the CIP process of the processing apparatus. The stage may be a flushing stage or a stage of cleaning with a cleaning agent.

In some embodiments, the first and/or second time interval is between 2 seconds and 20 minutes, such as between 10 seconds and 18 minutes, such as between 15 seconds and 20 minutes, such as between 20 seconds and 15 minutes, such as between 25 seconds and 10 minutes, such as between 30 seconds and 5 minutes.

Thereby a sufficient cleaning of the membrane may be provided.

Potentially, any further time intervals, such as a third, fourth, fifth, further, etc. time interval, may be between 2 seconds and 20 minutes, such as between 10 seconds and 18 minutes, such as between 15 seconds and 20 minutes, such as between 20 seconds and 15 minutes, such as between 25 seconds and 10 minutes, such as between 30 seconds and 5 minutes. Alternatively or additionally, the first time interval may be a remainder of a predetermined time interval and/or of the CIP process or a stage thereof.

Alternatively or additionally, the CIP process may last for a period of time, wherein the second time interval constitutes a portion of the period of time and the first time interval constitutes the remaining portion of the period of time. As a mere example, the CIP process and/or stage thereof may last 30 minutes. In this fictitious example, the second time interval may last 3 minutes and may be repeated three times. In between the three repetitions of the second time interval, the first fluid flow may in the fictitious example be applied for three first time intervals, each having a length of 7 minutes.

Alternatively or additionally, where the method comprises repeating the steps of applying the first and second pressure differences, respectively, the sum of the second time intervals and the first time intervals may constitute the total length of the CIP process and/or of the stage of the CIP process.

In some embodiments, the loop is a first loop and the pump is a first pump and wherein the processing apparatus further comprises a second loop comprising at least one second filtration membrane, and a second pump for feeding to the second loop a fluid during a cleaning-in-place, CIP, process of the second loop, and wherein the method further comprises:
during the first time interval during the CIP process of the processing apparatus, applying by the second pump a fourth fluid flow rate over the at least one second filtration membrane; and
during the second time interval during the CIP process of the processing apparatus, applying by the second pump a fifth fluid flow rate over the at least one second filtration membrane,
wherein the fourth fluid flow rate is larger than the fifth fluid flow rate.

By applying the fourth, larger fluid flow rate over the second filtration membrane during the first time interval, a larger fluid flow rate may be provided over the second filtration membrane, while a lower fluid flow rate is provided over the first filtration membrane. Correspondingly, during the second time interval, where the first, larger fluid flow rate is provided over the first filtration membrane, the fourth, lower fluid flow rate may be provided over the second filtration membrane. Thereby, a total flow of fluid to the two loops may be the same during the first and second time intervals, in turn allowing for a feed pump, which may provide fluid to the loops including the loop pumps, with lower capacity and, thus, being less expensive. Furthermore, a piping diameter of e.g. a feed pipe and/or a baseline, and/or an electrical installation may be reduced compared to the traditional CIP process in which all pumps run at full speed.

The fourth fluid flow rate may be the same as or similar to the second fluid flow rate and/or a further fluid flow rate where a such is provided. Alternatively, the fourth fluid flow rate may be different from the second fluid flow rate, such as larger than or smaller than the second fluid flow rate.

The fifth fluid flow rate may be the same as or similar to the first fluid flow rate and/or a third fluid flow rate. Alternatively, the fifth fluid flow rate may be different from the first fluid flow rate, such as larger than or smaller than the first fluid flow rate.

The relation between the fifth and fourth fluid flow rates may be similar or identical to the relation between the first and second fluid flow rates, respectively. Alternatively or additionally, the relation between the fifth and fourth fluid flow rates may be as described in this specification with respect to the first and second flow rates. In some embodiments, the fifth fluid flow rate may be between 0 % and 80 % of the fourth fluid flow rate.

It will furthermore be appreciated that any feature described with respect to the first loop and pump may apply to the second loop. For instance, any details regarding inputs, outputs, adjustment of flows, etc. described with respect to the first loop may apply to the second loop.

In some embodiments, e.g. where the processing system comprises a plurality of loops, each comprising a filtration membrane, a first fluid flow rate may be applied to at least one filtration membrane and a second fluid flow rate may be applied to at least one filtration membrane at the same time, wherein second fluid flow rate is larger than the first fluid flow rate.

In some embodiments, the processing system is a processing system for processing one or more of a dairy product, brewed goods, a non-alcoholic beverage, a food and/or beverage product, a fermented product, a permeate, a condensate, a chemistry product, wastewater, drinking water, desalinated water, and/or a chemical.

The processing system may comprise a membrane filtration plant. Filter(s) and/or membrane(s) of the processing system may be filter(s) and/or membrane(s) of the membrane filtration plant.

In a second aspect, the present disclosure relates to a control device for controlling a setting of a pump, wherein the control device comprises one or more outputs configured to be in operational connection with a respective pump and a processing unit, wherein the processing unit is configured to perform the method according to the first aspect.

The control device according to the second aspect may provide identical or similar advantages to the method according to the first aspect of the disclosure.

The pump may be a pump of a loop of a processing system. The loop may comprise at least one filtration membrane. The pump may be for feeding to the loop a fluid during a cleaning-in-place, CIP, process of the processing apparatus.

The output may be any output of the control device and may, potentially, include a plug, a socket, or a hardwired connection to another device. The output may be configured to provide an electrical connection to a pump, a control unit of a pump, a power supply of a pump, or the like. Alternatively or additionally, the output may be and/or comprise an output pin, potentially of the processing unit, such as a general-purpose input/output (GPIO) pin. Alternatively or additionally, the output may comprise a wired or wireless connection interface.

The processing unit may be or may comprise any processing unit, such as a central processing unit (CPU), a microcontroller unit (MCU), a field-programmable gate array (FPGA), or the like. The processing unit may comprise one or more individual processing units, which, potentially together, are configured to perform the method according to the first aspect.

The control unit may further comprise a memory, such as a memory unit. The memory may comprise instructions thereon which causes the processing unit to perform the method according to the first aspect. The memory may be a random-access memory (RAM), a read-only memory (ROM), a Flash memory or another type of memory.

In a third aspect, the present disclosure relates to a processing system comprising a loop, the loop comprising at least one filtration membrane, and a pump for feeding to the loop a fluid during a cleaning-in-place, CIP, process of the processing system, wherein the processing system further comprises a control device according to the second aspect.

The processing system according to the third aspect may provide identical or similar advantages to the method according to the first aspect of the disclosure or identical or similar advantages to the control unit according to the second aspect of the disclosure.

The processing system and elements thereof may comprise any feature described with respect to the first aspect.

The control device may be operationally connected and/or connectable to the pump. Alternatively or additionally, the control device may be operationally connected and/or connectable to a control unit controlling one or more parameters of the pump in response to an input.

In some embodiments of the processing system, the loop is a first loop and the pump is a first pump and wherein the processing apparatus further comprises a second loop comprising at least one second filtration membrane, and a second pump for feeding to the second loop a fluid during the CIP process of the processing system.

The control device may be configured to during the first time interval during the CIP process of the processing apparatus, applying by the second pump a fourth fluid flow rate over the second filtration membrane; and
during the second time interval during the CIP process of the processing apparatus, applying by the second pump a fifth fluid flow rate over the second filtration membrane.

In some embodiments, the processing system comprises a membrane filtration plant.

Filter(s) and/or membrane(s) of the processing system, as described in the preceding and with respect to the first and second aspects, may be filter(s) and/or membrane(s) of the membrane filtration plant.

In a fourth aspect, the present disclosure relates to a computer program product comprising program code means adapted to cause a data processing system to perform the method according to the first aspect, when said program code means are executed on the data processing system.

The computer program product according to the fourth aspect may provide identical or similar advantages to the method according to the first aspect of the disclosure or identical or similar advantages to the control unit according to the second aspect of the disclosure.

The control device may be an exemplary data processing system. Alternatively or additionally, a device comprising a processing unit and a memory, and potentially outputs for connecting the control device operationally to one or more pumps, may be considered a data processing system.

In some embodiments, the computer program product further comprises a non-transitory computer-readable medium having stored thereon the program code means.

It is noted that the invention relates to all possible combinations of features recited in the claims, even across different aspects. Other objectives, features, and advantages of the present inventive concept will appear from the following detailed disclosure, from the attached claims as well as from the drawings. A feature described in relation to one of the aspects may also be incorporated in the other aspect, and the advantage of the feature is applicable to all aspects in which it is incorporated.

### Brief Description of Drawings

In the following description embodiments of the invention will be described with reference to the schematic drawings, in which:
FIG. 1 shows a flowchart of an embodiment of a method for use in cleaning a processing system according to the present invention,
FIG. 2 shows a schematic diagram of an embodiment of a processing system according to the present invention,
FIGs. 3A-3C show exemplary bar charts of fluid flow rates in loops of a processing system according to the present invention,
FIGs. 4A-4E show exemplary bar charts of fluid flow rates in loops of a processing system according to the present invention, and
FIG. 5 shows a scatter plot of fluid flow rates in loops of a processing system according to the present invention.

Similar reference numerals are used for similar elements across the various embodiments and figures described herein.

### Detailed description

The present invention will now be described more fully hereinafter with reference to the accompanying drawings, in which embodiments of the invention are shown. This invention may, however, be embodied in many different forms and should not be construed as limited to the embodiments set forth herein; rather, these embodiments are provided for thoroughness and com pleteness.

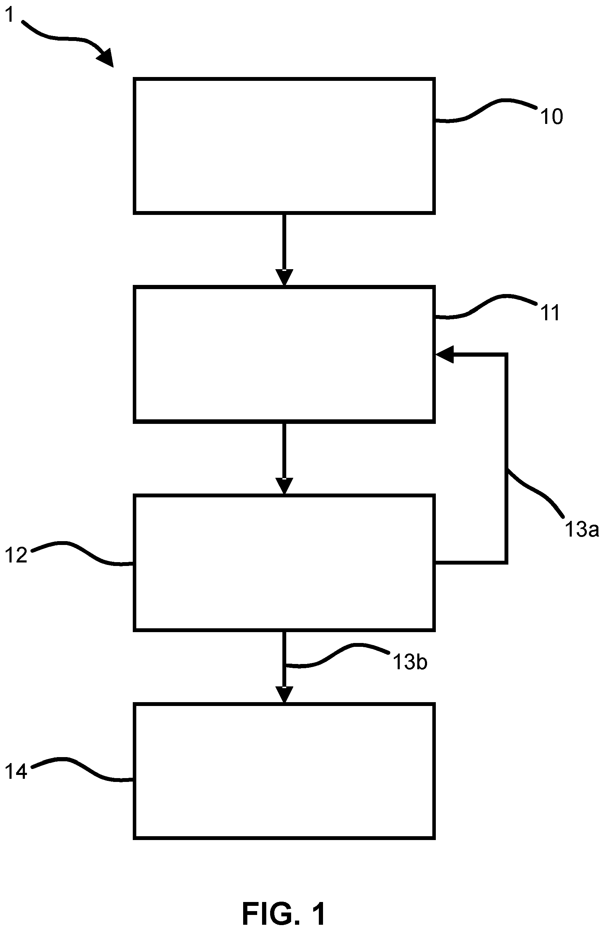

FIG. 1 shows a flowchart of an embodiment of a method 1 for use in cleaning a processing system according to the present invention.

The method 1 takes place in a processing system, the processing system comprising a loop, the loop comprising at least one filtration membrane, and a pump for feeding to the loop a fluid during a cleaning-in-place, CIP, process of the processing apparatus.

The method 1 starts in the beginning step 10, in which the method initiates. The beginning step 10 may be a beginning of a stage of a CIP process or a beginning of a CIP process of the processing system. Alternatively, the beginning step 10 may occur during a CIP process of the processing system.

The method next proceeds to step 11. The method 1 proceeds in step 11 to, during a first time interval during the CIP process of the processing apparatus, applying by the pump a first fluid flow rate over the filtration membrane.

Next, the method 1 proceeds to step 12, in which, during a second time interval during the CIP process of the processing apparatus, applying by the pump a second fluid flow rate over the filtration membrane, wherein the second fluid flow rate is larger than the first fluid flow rate.

In the method 1 of FIG. 1, after step 12, the method may return 13a to step 11, in which the first fluid flow rate is applied over the filtration membrane by the pump for the first time interval, and again proceed to step 12.

The method 1 may return 13a to perform steps 11-12 again only one time or a number of times.

Whether steps 11-12 are performed only once during the method 1 or repeated by the method 1 returning 13a from step 12 to step 11, the method 1 may from step 12 proceed 13b to step 14, at which the method 1 ends. Step 14 may be an end of the CIP process, an end of a stage of a CIP process or may occur during a CIP process, such as a stage thereof.

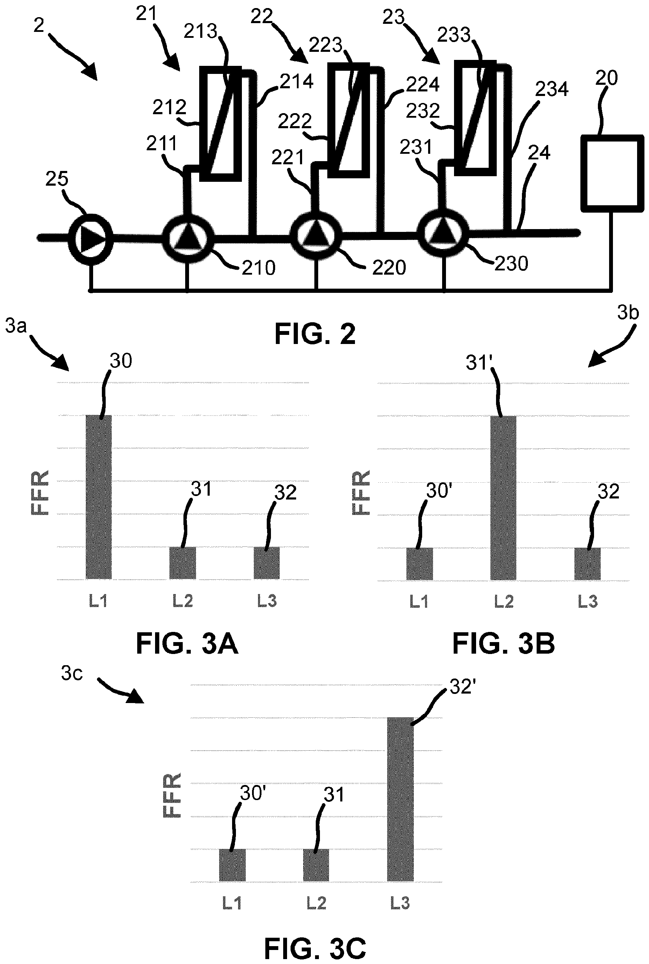

FIG. 2 shows a schematic diagram of an embodiment of a processing system 2 according to the present invention.

The processing system 2 comprises a first loop 21, a second loop 22, and a third loop 23. The first loop 21 comprises a pump 210 for feeding a fluid to an inlet 211 of the loop 21. The first loop 21 further comprises a filter 212 with a filtration membrane 213 as well as an outlet 214 on an opposite side of the filter 212 than the inlet 211.

Correspondingly, the second and third loops 22, 23 comprises a respective pump 220, 230 for feeding a fluid to an inlet 221, 231 of the second and third loops 22, 23, respectively. To each of the inlets 221, 231 of the second and third loops, 22, 23, a respective filter 222, 232 each having a filtration membrane 223, 233 of the second and third loops 22, 23 are connected. The second and third loops each comprise a respective outlet 224, 234.

The outlets 214, 224, 234 of the first 21, second 22 and third loops 23 are connected to a baseline 24. The baseline 24 comprises a pipe for allowing a fluid to flow from the outlets 214, 224, 234 to the pumps 210, 220, 230 of the loops 21, 22, 23. The baseline 24 further comprises a fluid to be provided to the loops 21, 22, 23 by means of a feed pump 25 for feeding fluid to the loops 21, 22, 23.

The processing system 2 further comprises a control unit 20 operationally connected to each of the first 210, second 220, and third pumps 230. The control unit 20 is further connected to the feed pump 25.

The control unit 20 is configured to control the pumps 210, 220, 230, 25, during a first time interval during a CIP process of the processing system 2, to provide a first fluid flow rate over one or more of the filtration membranes 213, 223, 233 and, during a second time interval during the CIP process of the processing system 2, to provide a second fluid flow rate over one or more of the filtration membranes 213, 223, 233, the second fluid flow rate being larger than the first fluid flow rate.

The control unit 20 may be configured to provide the fluid flow rates by adjusting e.g. one or more of an input power, an output power, and/or a speed of one or more of the pumps 210, 220, 230, 25.

The control unit 20 may alternatively or additionally be configured to perform the method 1 illustrated in FIG. 1.

While certain elements of the processing system 2 are illustrated in FIG. 2, it will be appreciated that the processing system 2 may further comprise a number of other elements, such as permeate tanks, fluid tanks for cleaning agents, electrical and water supply installations, etc.

FIGs. 3A-3C show exemplary bar charts 3a, 3b, 3c of fluid flow rates in loops of a processing system according to the present invention.

FIG. 3A shows a bar chart 3a of fluid flow rates over filtration membranes of a first, second and third loop, respectively, during a time interval, such as a first time interval, during a CIP process of the processing system. From FIG. 3A, it is can be seen that the fluid flow rate 30 of the first loop is higher than a fluid flow rate 31 of the second loop and a fluid flow rate 32 of the third loop. The fluid flow rates 31 and 32 are first fluid flow rates and the fluid flow rate 30 is a second fluid flow rate, which is higher than the first fluid flow rates.

While the fluid flow rates 31 and 32 are illustrated in FIG. 3A as approximately identical, it will be understood that they may, in other embodiments, be different. In the flow chart 3a, the fluid flow rates 31 and 32 are illustrated as approximately 20 % of the fluid flow rate 30. It will, however, be appreciated that the fluid flow rates 31 and 32 may in other embodiments be larger or lower relative to the fluid flow rate 30.

FIG. 3B shows a bar chart 3b of fluid flow rates over the filtration membranes of the first, second and third loops, respectively, during another time interval, such as a second time interval, during the CIP process. The time interval may be subsequent to, such as consecutive to, the time interval illustrated in FIG. 3A.

As shown in FIG. 3B, the fluid flow rate 32 of the third loop remains the same fluid flow rate, such as the first fluid flow rate, as in the time interval illustrated in bar plot 3a. In the time interval illustrated in FIG. 3B, however, a fluid flow rate 30' of the first loop is reduced compared to the flow rate 30 illustrated in bar plot 3a. The flow rate 30' is a first fluid flow rate.

For the second loop, as illustrated in FIG. 3B, the fluid flow rate 31' is increased as compared to the fluid flow rate 31. The fluid flow rate 31' of the second loop during the time interval of bar chart 3b is, thus, a second flow rate.

FIG. 3C shows a bar chart 3c of fluid flow rates over the filtration membranes of the first, second and third loops, respectively, during yet another time interval, such as a third time interval, during the CIP process. The time interval may be subsequent to, such as consecutive to, the time interval illustrated in FIGs. 3A and/or 3B. Alternatively, the time interval of bar chart 3c may be prior to the time intervals of bar charts 3a and/or 3b.

During the time interval of bar chart 3c, the fluid flow rate 30' remains the same, i.e. a first fluid flow rate, as in bar chart 3b. Compared to bar chart 3b, the fluid flow rate 31 of the second loop has been reduced to be a first fluid rate again during the time interval of bar chart 3c and similar to the fluid flow rate 31 of the bar chart 3a.

For the third loop, as illustrated in FIG. 3C, the fluid flow rate 32' is increased as compared to the fluid flow rate 32. The fluid flow rate 32' of the third loop during the time interval of bar chart 3c is, thus, a second flow rate.

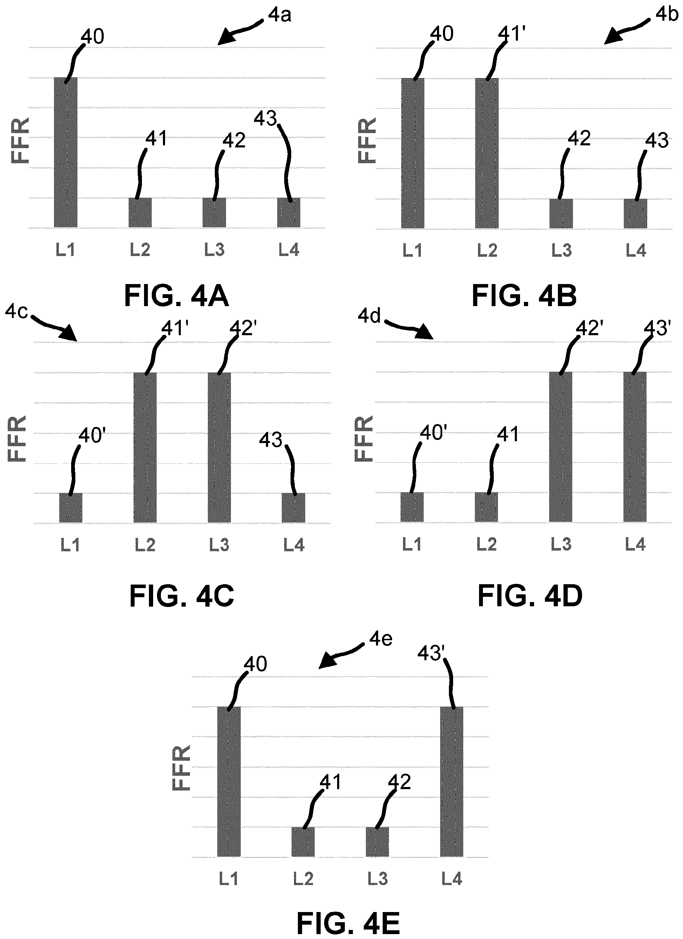

FIGs. 4A-4C show exemplary bar charts 4a, 4b, 4c, 4d, and 4e, respectively, of fluid flow rates in loops of a processing system according to the present invention.

FIG. 4A shows a bar chart 4a of fluid flow rates over filtration membranes of a first, second, third, and fourth loop, respectively, during a time interval, such as a first time interval, during a CIP process of a processing system. Correspondingly, FIG. 4B shows a bar chart 4b of fluid flow rates over the filtration membranes of the loops during another time interval, such as a second time interval, during the CIP process. Similarly, FIGs. 4C-4E show bar charts 4c-4e of fluid flow rates of the filtration membranes of the loops during other time intervals, such as a third, fourth, and fifth time interval, respectively, during the CIP process.

The time intervals of bar charts 4a-4e may be subsequent to each other and/or consecutive, e.g. so that a first time interval is the earliest time interval, followed by the second, third, fourth, and fifth time interval, respectively. Alternatively, the time intervals of bar charts 4a-4e may occur in another order, such as any other order.

From the bar chart 4a of FIG. 4A, it is can be seen that the fluid flow rate 40 of the first loop is higher than a fluid flow rate 41 of the second loop, a fluid flow rate 42 of the third loop, and a fluid flow rate 43 of the fourth loop during the time interval of bar chart 4a. The fluid flow rates 41, 42, and 43 are first fluid flow rates and the fluid flow rate 40 is a second fluid flow rate.

During the time interval of bar chart 4b of FIG. 4B, the fluid flow rates 40, 42, and 43 are the same as in the time interval of bar chart 4a, i.e. second, first, and first fluid flow rates, respectively. In bar chart 4b, a fluid flow rate 41' of the second loop is, during this time interval, larger than the fluid flow rate 41 during the time interval of bar chart 4a. The fluid flow rate 41' is a second fluid flow rate, larger than the (first) fluid flow rate 41.

During the time interval of bar chart 4c of FIG. 4C, the fluid flow rates 41', and 43 are the same as in the time interval of bar chart 4b, i.e. a second, and first fluid flow rate, respectively. In bar chart 4b, a fluid flow rate 42' of the third loop is, during this time interval, larger than the fluid flow rate 42 during the time interval of bar chart 4a. The fluid flow rate 42' is a second fluid flow rate, larger than the (first) fluid flow rate 42. A fluid flow rate 40' is, during the time interval of bar chart 4c, a first fluid flow rate smaller than the (second) fluid flow rate 40 shown during the time intervals of bar charts 4a-4b.

In bar chart 4d of FIG. 4D, the flow rates of the first, second, and third loops are the first 40', first 41, and second 42 ' flow rates, respectively. A flow rate 43' of the fourth loop is a second fluid flow rate larger than the (first) fluid flow rate 43.

In bar chart 4e of FIG. 4E, the flow rates of the first, second, third, and fourth loops are the second 40, first 41, first 42, and second 43' flow rates, respectively.

The bar charts 4a-4e may illustrate consecutive fluid flow rates of the loops. Potentially, subsequent to the time interval of bar chart 4e, the fluid flow rates may be as illustrated in bar chart 4b again and/or the fluid flows of bar charts 4b-4e may be repeated. Alternatively or additionally, fluid flows may be stopped, and/or the CIP process or a stage thereof may be ended.

While the flow rates 30, 31', and 32' in FIGs. 3A-3C and flow rates 40, 41', 42' and 43' in FIGs. 4A-4E are illustrated as identical, it will be appreciated that these may be different second flow rates and need not have or correspond to the same flow rates. The flow rates 30, 31', and 32' are, however, each larger than first flow rates 30', 31, and 32, respectively. Correspondingly, flow rates 40, 41', 42', and 43' are larger than first flow rates 40', 41, 42, and 43, respectively

Flow rates 30', 31, and 32 are illustrated as identical, and flow rates 40', 41, 42, and 43 are additionally illustrated as identical here. In other embodiments, the flow rates 30', 31, and 32 may be different from one another and/or flow rates 40', 41, 42, and 43 may be different from one another. In some embodiments, the first flow rates of each loop may, alternatively or additionally, vary across different time intervals.

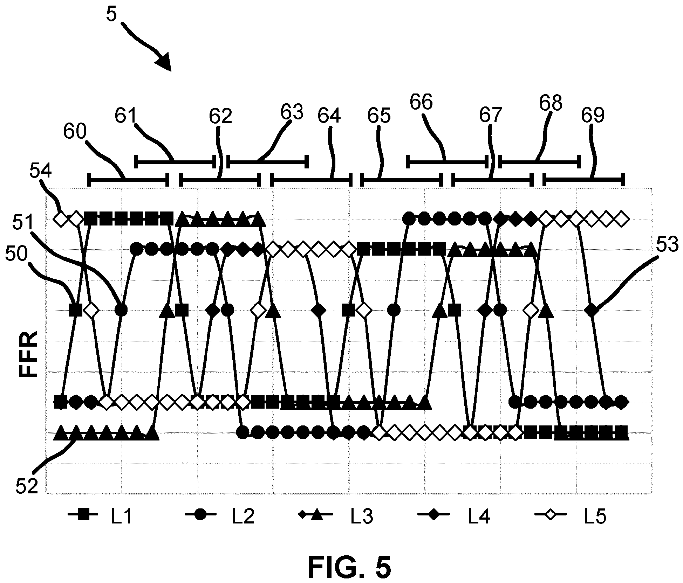

FIG. 5 shows a scatter plot 5 of fluid flow rates in loops of a processing system according to the present invention. In the scatter plot 5, the fluid flow rate over time, segmented in a first to a tenth time interval 60-69, is shown. The fluid flow rates are fluid flow rates during a CIP process of the processing system. In FIG. 5, the fluid flow rates in five loops of a processing system is shown, each loop having a pump for providing the fluid flow over the membrane.

In FIG. 5, a respective fluid flow rate 50, 51, 52, 53, 54 over a filtration membrane of a first, second, third, fourth, and fifth loop, respectively, is shown.

During a first time interval 60, the fluid flow rate 50 of a first pump is increased to have high fluid flow rate level, i.e. a level of a second fluid flow rate. During this first time interval, such as at the beginning (i.e. illustrated as the left-most portion in FIG. 5) the fluid flow rates 51, 53, and 54 are low fluid flow rates, i.e. having levels as first fluid flows rate, while the fluid flow rate 52 is a low fluid flow rate having a level of a fourth fluid flow rate.

During the first time interval 60, the fluid flow rate 51 of the second loop is increased from being a first fluid flow rate to a larger fluid flow rate, i.e. having a value of a third fluid flow rate, in a second time interval 61. The first 60 and second time interval 61 overlaps as shown in FIG. 5.

After the first time interval 60, the fluid flow rate 50 of the first loop is decreased from being a second, larger fluid flow rate to a first fluid flow rate in the third 62, fourth 63, and fifth time intervals 64. The fluid flow rate 50 of the first loop is increased to be a third fluid flow rate in the sixth time interval 65. The fluid flow rate 50 is subsequently decreased to be a fourth fluid flow rate, smaller than the third fluid flow rate, during the eight, ninth, and tenth time intervals.

In a similar manner, it can be seen from FIG. 5 that the fluid flow rate 51 of the second loop is a third fluid flow rate during the second time interval 61, a fourth fluid flow rate during time intervals 63, 64, 65, a first fluid flow rate during time interval 66, and a second fluid flow rate during time intervals 68, 69. The fluid flow rate 52 of the third loop is a first fluid flow rate during time interval 62, a second fluid flow rate during time intervals 64, 65, a first fluid flow rate during time interval 67, and a fourth fluid flow rate during time interval 69.

In FIG. 5, the fluid flow rate 53 of the fourth loop is a first fluid flow rate during time intervals 60-61, a third fluid flow rate during time interval 63, a first fluid flow rate during time interval 65-66, and a second fluid flow rate during time interval 68. The fluid flow rate 54 of the fifth loop is a first fluid flow rate during the time intervals 60-62, a third fluid flow rate during time intervals 64, a fourth fluid flow rate during time intervals 65-67, and a second fluid flow rate during time interval 69.

In FIG. 5, the first, second, third, and fourth fluid flow rates are illustrated as identical for all loop fluid flows 50-54. It will, however, be appreciated that these may in other embodiments be different for different loops and/or loop fluid flows.

Similarly, the relative differences between the first, second, third, and fourth fluid flow rates are provided as an example. It will be appreciated that the relative difference between the fluid flow rates may, in other embodiments, be different. For instance, in some embodiments, a fourth fluid flow level may be larger than a first and/or second fluid flow level. Alternatively or additionally, a third fluid flow level may be larger than the second fluid flow level.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method for use in cleaning a processing system, the processing system comprising a loop, the loop comprising at least one filtration membrane and a pump for feeding to the loop a fluid during a cleaning-in-place, CIP, process of the processing apparatus, the method comprising:
during a first time interval during the CIP process of the processing apparatus, applying by the pump a first fluid flow rate over the at least one filtration membrane, and
during a second time interval during the CIP process of the processing apparatus, applying by the pump a second fluid flow rate over the at least one filtration membrane,
wherein the second fluid flow rate is larger than the first fluid flow rate.

2. The method according to claim 1, wherein the method further comprises:
during a third time interval during the CIP process of the processing apparatus applying by the pump a third fluid flow rate over the at least one filtration membrane, wherein the second fluid flow rate is larger than the third fluid flow rate.

3. The method according to claim 1 or 2, wherein the first and second fluid flow rates are provided by setting one or more of a power consumption of the pump, an output power of the pump, a speed of a pump, a loop recirculation flow, a permeate flow, a baseline pressure present at an outlet of the loop, and/or a valve in the loop.

4. The method according to any one of the preceding claims, wherein the first fluid flow rate over the at least one filtration membrane is between 0 % and 80 % of the second fluid flow rate, such as between 0 % and 70 % of the second fluid flow rate, such as between 0 % and 60 % of the second fluid flow rate, such as between 0 % and 50 % of the second fluid flow rate.

5. The method according to any one of the preceding claims, wherein the method further comprises:
determining a first pressure difference across the at least one filtration membrane, the first pressure difference being caused by the first fluid flow rate of fluid over the at least one filtration membrane,
determining a second pressure difference across the at least one filtration membrane, the second pressure difference being caused by the second fluid flow rate of fluid over the at least one filtration membrane,
wherein the first fluid flow rate is applied to provide a first pressure difference, which is between 0 % and 80 % of the second pressure difference.

6. The method according to any one of the preceding claims, wherein the applying of the first fluid flow rate and the applying of the second fluid flow rate are repeated during the CIP process of the processing apparatus.

7. The method according to any one of the preceding claims, wherein the first and/or second time interval is between 2 seconds and 20 minutes, such as between 10 seconds and 18 minutes, such as between 20 seconds and 15 minutes, such as between 25 seconds and 10 minutes, such as between 30 seconds and 5 minutes.

8. The method according to any one of the preceding claims, wherein the loop is a first loop and the pump is a first pump and wherein the processing apparatus further comprises a second loop comprising at least one second filtration membrane and a second pump for feeding to the second loop a fluid during a cleaning-in-place, CIP, process of the processing apparatus, and wherein the method further comprises:
during the first time interval during the CIP process of the processing apparatus, applying by the second pump a fourth fluid flow rate over the second filtration membrane; and
during the second time interval during the CIP process of the processing apparatus, applying by the second pump a fifth fluid flow rate over the second filtration membrane,
wherein the fourth fluid flow rate is larger than the fifth fluid flow rate.

9. The method according to any one of the preceding claims, wherein the processing system is a processing system for processing one or more of a dairy product, brewed goods, a non-alcoholic beverage, a food and/or beverage product, a fermented product, a permeate, a condensate, a chemistry product, wastewater, drinking water, desalinated water, and/or a chemical.

10. A control device for controlling a setting of a pump, wherein the control device comprises one or more outputs configured to be in operational connection with a respective pump and a processing unit, wherein the processing unit is configured to perform the method according to any one of claims 1-9.

11. A processing system comprising a loop, the loop comprising at least one filtration membrane, and a pump for feeding to the loop a fluid during a cleaning-in-place, CIP, process of the processing system, wherein the processing system further comprises a control device according to claim 10.

12. The processing system according to claim 11, wherein the loop is a first loop and the pump is a first pump and wherein the processing apparatus further comprises a second loop comprising at least one second filtration membrane, and a second pump for feeding to the second loop a fluid during the CIP process of the processing system.

13. The processing system according to any of claims 11-12, wherein the processing system comprises a membrane filtration plant.

14. A computer program product comprising program code means adapted to cause a data processing system to perform the method according to any one or claims 1-9, when said program code means are executed on the data processing system.

15. The computer program product according to claim 14, wherein said computer program product comprises a non-transitory computer-readable medium having stored thereon the program code means.
